# FASCICULE DE BREVET EUROPEEN

(11) **EP 0 428 885 B1**
(45) Date de publication et mention de la délivrance du brevet: **29.12.1993**
(21) Numéro de dépôt: 90120348.9
(22) Date de dépôt: 24.10.1990
(51) Int. Cl.: A63C 5/12, B29C 67/22

(54) **Procédé de réalisation d'un ski par injection, et structure de ski**
Verfahren zur Herstellung eines Skis durch Injektion, und Skistruktur
Process for making a ski by injection, and ski structure

(30) Priorité: 22.11.1989 FR 8915665
(43) Date de publication de la demande: 29.05.1991
(73) Titulaire: SALOMON S.A., 74370 Pringy (FR)
(72) Inventeur: Cazaillon, Jean-Mary, F-74000 Cran Gevrier (FR); Chatellard, Bernard, F-74290 Veyrier du Lac (FR)

(56) Documents cités:
- EP-A- 0 017 792
- EP-A- 0 180 678
- EP-A- 0 226 105
- EP-A- 0 272 359
- CH-A- 483 851
- DE-A- 1 806 433
- DE-A- 1 933 012
- FR-A- 2 260 362
- FR-A- 2 627 700

## Description

La présente invention concerne la fabrication des skis utilisés en sports d'hiver, et destinés à glisser sur la neige et la glace. L'invention concerne également une structure de ski en tant que telle.

Les skis actuels ont généralement une structure composite dans laquelle sont combinés différents matériaux de manière que chacun d'eux intervienne de façon optimale, compte-tenu de la distribution des contraintes mécaniques. Ainsi, la structure comprend généralement des éléments de protection périphérique, formant la face supérieure et les faces latérales du ski, des éléments internes de résistance ou lames de résistance, constitués en un matériau ayant une grande résistance mécanique et une grande raideur. La structure comprend également des éléments de remplissage tels qu'un noyau en structure alvéolaire, une semelle de glissement formant la face inférieure du ski et assurant un bon glissement sur la neige, et des carres métalliques formant les arêtes inférieures du ski.

Pour obtenir les caractéristiques physiques appropriées, la fabrication des skis modernes fait donc appel à des matériaux très divers : les semelles de glisse sont généralement en polyéthylène les noyaux alvéolaires sont en mousse synthétique ; les carres sont en acier; les surfaces supérieures du ski sont réalisées en feuilles thermoplastiques ; les lames de résistance sont des plaques de métal ou de résines armées de fibres.

Un ski est soumis à des contraintes mécaniques sévères, nécessitant une bonne adhérence entre les divers matériaux constituant la structure.

Dans les techniques traditionnelles de fabrication de skis par injection, on dispose dans la cavité intérieure d'un moule, contre les parois périphériques de la cavité, les éléments périphériques du ski, comprenant les éléments supérieur et inférieur du ski, et, si nécessaire, des éléments latéraux. On injecte alors, dans l'espace ainsi défini par les faces internes des éléments périphériques, les constituants d'une mousse durcissable telle qu'une mousse polyuréthane ou une mousse phénolique. Après expansion et durcissement, ladite mousse assure l'assemblage des éléments.

L'une des difficultés importantes, dans les procédés de réalisation de skis par injection, réside dans le positionnement et le maintien des éléments périphériques du ski avant l'injection. En particulier, on doit, avant injection de la mousse, maintenir en place des ébauches de renfort mécanique supérieur et/ou inférieur du ski, éléments formés de matières fibreuses préimprégnées dans une résine. Les ébauches doivent alors soit être fixées préalablement aux parois périphériques du ski, lors d'une étape préalable, soit être maintenues plaquées contre les parois, à défaut de quoi la mousse risque de s'infiltrer entre l'ébauche et la paroi, et créer des défauts de structure. Le maintien des ébauches nécessite de prévoir des moules de forme particulière, comportant des encoches latérales dans lesquelles peuvent être logées les extrémités latérales des ébauches. Le maintien des ébauches n'est pas possible dans le cas où l'ébauche doit être plaquée dans le fond d'une coque en U inversé, les bords latéraux de l'ébauche n'étant alors pas accessibles car enfermés par les branches latérales du U.

On peut penser que la mousse, lors de son expansion, est capable de plaquer les éléments de renfort contre les parois périphériques du ski. Toutefois, ce plaquage n'est généralement pas suffisant, et, dans le cas d'ébauches en matière fibreuse préimprégnée, la mousse tend à s'infiltrer entre les fibres en repoussant très mal l'ébauche contre les parois. Il en résulte des défauts d'adhérence entre les éléments, et une détérioration sensible des qualités mécaniques de l'élément de renfort mécanique ainsi obtenu.

Une autre difficulté réside dans le fait que les mousses durcissables présentent des propriétés d'adhérence médiocres avec un certain nombre de matériaux destinés à constituer la structure du ski ou présentent avec ces matériaux des incompatibilités. Il en résulte des défauts d'adhérence entre le noyau en mousse durcie et les autres matériaux du ski.

Le document EP-B1-180678 concerne une structure de ski traditionnelle ayant recours à un mode de fabrication par assemblage et collage d'éléments composites en bandes autour d'un noyau préfabriqué, soit par voie sêche soit par voie humide.

Le document DE 1.806.433 décrit un procédé de fabrication d'un élément moulé, tel qu'un ski, qui consiste à disposer dans un moule, un noyau en matière plastique qui s'expanse à la chaleur, des couches de fibres de verre imprégnées de résine réticulant à la chaleur qui entoure ledit noyau et des éléments périphériques tels qu'une plaque de dessus et des carres de protection. Le moule est ensuite chauffé pour obtenir l'expansion du noyau et la réticulation de la résine des couches de renfort.

Le document CH-483851 se rapporte à un procédé de ski métallique qui consiste à former un élément supérieur dans une configuration en forme de U, puis à souder à cet élément supérieur, un second élément inférieur plat pour fournir une chambre longitudinale ; enfin à injecter dans ladite chambre une matière plastique qui s'expanse "in situ".

Le document FR-A-2627700 concerne un procédé d'assemblage d'un ski à partir de sous-ensembles de configuration plane dont chaque face d'assemblage est munie d'une mince couche de matériau thermoplastique ; l'assemblage étant provoqué par plaquage des couches de matériau thermoplastique, l'une contre l'autre et par échauffement pour provoquer leur fusion et leur soudure.

La présente invention a notamment pour objet d'éviter les inconvénients des procédés connus, en proposant un nouveau procédé permettant de réaliser, en une seule étape, le positionnement et l'assemblage de tous les éléments par injection, sans nécessiter le maintien latéral des ébauches d'éléments de résistance mécanique.

Le positionnement des éléments de renfort se trouve ainsi nettement amélioré, et l'on évite totalement la pénétration de mousse durcissable à l'intérieur des éléments de renfort et entre les éléments de renfort et les parois périphériques.

Le procédé de l'invention est facile à mettre en oeuvre, les différents éléments pouvant être aisément positionnés avant l'injection sans précautions particulières, le positionnement et l'injection pouvant être effectués en une seule opération, ce qui se traduit par une économie appréciable de temps et de main d'oeuvre.

Le procédé de l'invention permet en outre, par cette facilité de positionnement, de multiplier si nécessaire les éléments internes à assembler, sans avoir à multiplier les moyens de maintien de ces éléments.

Pour atteindre ces objets ainsi que d'autres, le procédé de réalisation de ski selon l'invention comprend une étape d'injection des constituants d'une mousse durcissable, d'expansion et de durcissement de ladite mousse durcissable, dans l'espace intérieur défini par les éléments périphériques du ski, lesdits éléments périphériques comprenant notamment un élément inférieur en forme de plaque, un élément supérieur en forme de paroi, et au moins un élément de renfort mécanique supérieur. Selon l'invention :
- avant injection, on réalise dans l'espace intérieur un compartiment tubulaire fermé déformable dont l'une au moins des parois est formée d'une membrane déformable et extensible en une matière présentant de bonnes propriétés d'adhérence sur la mousse durcissable et sur les éléments périphériques,
- on dispose, sur l'une au moins des dites parois du compartiment tubulaire, une ébauche de renfort mécanique
- on injecte les constituants de mousse durcissable à l'intérieur dudit compartiment tubulaire, de sorte que, pendant l'expansion, la mousse emprisonnée dans le compartiment tubulaire repousse et déforme la membrane qui elle-même repousse l'ébauche de renfort et vient la plaquer contre la face interne de l'un au moins des dits éléments, la membrane constituant l'interface entre l'un au moins des éléments et la mousse,
- par échauffement, on assure le collage entre les éléments préimprégnés et la membrane déformable et extensible maintenue par la mousse,
- après collage, on laisse refroidir et on démoule.

Selon un mode de réalisation, le compartiment tubulaire est formé par la face supérieure de l'élément inférieur, et par une membrane en forme de feuille dont les bords latéraux sont pincés entre les bords latéraux de l'élément supérieur et de l'élément inférieur ; les constituants de mousse durcissable sont alors injectés au-dessous de la membrane, entre la membrane et l'élément inférieur.

Selon un autre mode de réalisation, le compartiment tubulaire comprend deux membranes en forme de feuilles disposées l'une sur l'autre et dont les bords latéraux sont pincés entre les bords latéraux de l'élément supérieur et de l'élément inférieur. Les deux membranes constituent une paroi supérieure et une paroi inférieure de compartiment tubulaire, parois entre lesquelles sont injectés les constituants de la mousse durcissable.

Selon un troisième mode de réalisation, le compartiment tubulaire est formé d'une membrane elle-même tubulaire, que l'on dispose dans l'espace intérieur, et à l'intérieur de laquelle on injecte les constituants de la mousse durcissable.

On reconnait un ski réalisé selon la présente invention à ce qu'il comprend un élément inférieur et un élément supérieur en forme de paroi à profil en U inversé solidarisés l'un à l'autre par un noyau en mousse injectée et en ce qu'il comprend un film de polymère disposé à l'interface entre la mousse du noyau et au moins l'élément supérieur, ledit élément supérieur comportant un élément de renfort mécanique supérieur formant la face inférieure dudit élément supérieur, face contre laquelle est collé le film de polymère.

D'autres objets, caractéristiques et avantages de la présente invention ressortiront de la description suivante de modes de réalisation particuliers, faite en relation avec les figures jointes, parmi lesquelles :
- les figures 1 et 2 illustrent les deux étapes principales d'un procédé selon l'invention, dans le cas d'une membrane déformable tubulaire ;
- la figure 3 illustre un mode de réalisation de l'invention dans le cas de deux membranes en forme de feuilles ;
- la figure 4 illustre un mode de réalisation de l'invention dans le cas d'un élément tubulaire comprenant une seule membrane en forme de feuille ;
- la figure 5 illustre un mode de réalisation de l'invention dans le cas d'un élément tubulaire comprenant une membrane tubulaire entourée d'une ébauche de renfort tubulaire ;
- la figure 6 illustre un autre mode de realisation dans le cas d'un élément tubulaire comprenant une membrane tubulaire entourée d'une enveloppe de renfort ne se refermant pas sous l'élément tubulaire mais simplement pliée ;
- la figure 7 est une vue en coupe transversale d'une structure de ski selon un premier mode de réalisation de l'invention ; et
- la figure 8 est une coupe transversale d'une structure de ski selon un second mode de réalisation de l'invention.

Comme le représentent les figures, le procédé de réalisation d'un ski selon l'invention comprend une étape d'injection au cours de laquelle les éléments périphériques du ski sont insérés dans un moule 1 schématiquement représenté. Le moule comprend une coquille inférieure 2 et une coquille supérieure 3 se refermant selon un plan de joint 4 et délimitant une cavité intérieure. La cavité intérieure comprend une partie inférieure en forme d'évidement ménagé dans la coquille inférieure 2, et une partie supérieure en forme d'évidement ménagé dans la coquille supérieure 3, de sorte que la cavité intérieure du moule se trouve de part et d'autre du plan de joint 4.

On dispose, dans le moule 1, les éléments périphériques du ski. On entend par éléments périphériques les éléments formant les faces extérieures du ski, c'est-à-dire la face inférieure, la face supérieure et les faces latérales.

Dans le mode de réalisation représenté, les éléments périphériques du ski comprennent un élément inférieur 5 en forme de plaque, un élément supérieur 6 en forme de paroi à profil en U inversé, l'élément inférieur 5 et l'élément supérieur 6 étant en appui l'un contre l'autre selon leurs bords latéraux 7 et 8 sensiblement dans le plan de joint 4.

L'élément inférieur 5 comprend les carres métalliques 9 et 10, la semelle de glisse 11 en polyéthylène, et un renfort mécanique inférieur 12, ou lame de résistance mécanique inférieure.

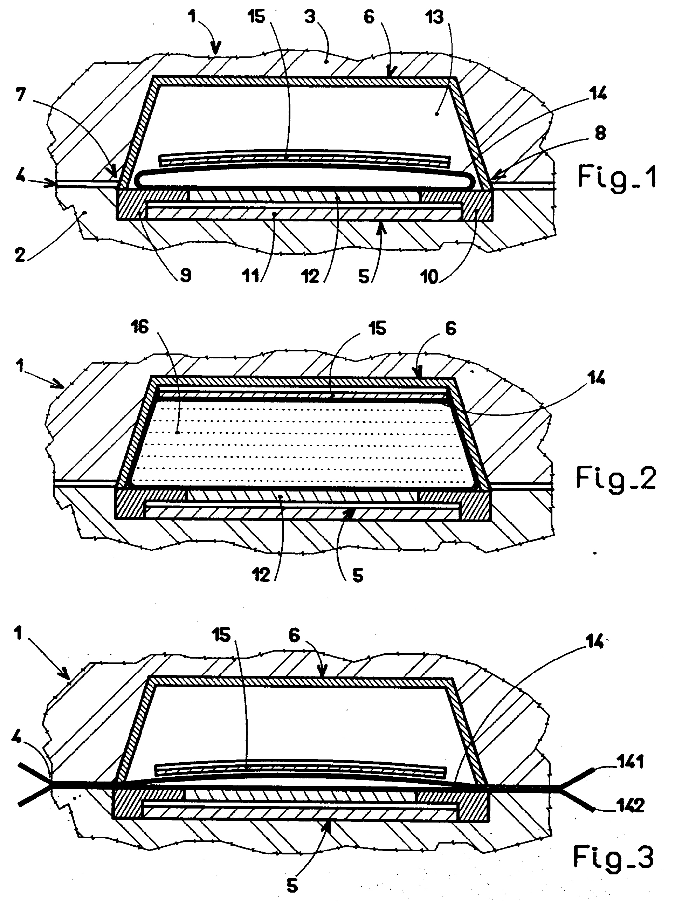

Selon un premier mode de réalisation, représenté sur les figures 1 et 2, lorsque l'on insère les éléments périphériques dans le moule 1, le renfort inférieur 12 peut être entièrement formé, et constitué par exemple d'une plaque métallique, ou d'une plaque en résine armée de fibres, la résine étant entièrement polymérisée.

En alternative, selon ce même mode de réalisation, lorsque l'on insère les éléments périphériques dans le moule 1, le renfort inférieur 12 peut être à l'état d'ébauche de renfort, constituée d'au moins une nappe textile de renfort préimprégnée d'une résine thermodurcissable humide ou partiellement réticulée ou d'une résine thermoplastique, ou d'une plaque de renfort métallique par exemple en alliage d'aluminium ou en acier.

Dans la présente description et dans les revendications, l'expression "nappe textile" englobe non seulement les nappes individuelles de fils parallèles unidirectionnels, mais également les étoffes bidirectionnelles, les tissus, les grilles, les tresses, les voiles, les étoffes non tissées et leurs combinaisons.

Dans l'espace intérieur 13 défini par les éléments périphériques du ski, on dispose, dans le mode de réalisation de la figure 1, une membrane tubulaire déformable et extensible constituant un compartiment tubulaire fermé 14. La membrane tubulaire est réalisée en une matière présentant de bonnes propriétés d'adhérence sur la mousse durcissable et sur les éléments périphériques du ski. La membrane tubulaire est posée sur la face supérieure de l'élément inférieur 5. On dispose, sur la face supérieure de la membrane tubulaire, une ébauche de renfort mécanique supérieur 15 formée d'au moins une nappe textile de renfort préimprégnée d'une résine thermodurcissable humide ou partiellement réticulée ou d'une résine thermoplastique, ou d'une plaque de renfort métallique par exemple en alliage d'aluminium ou en acier.

Sur la figure 2, on injecte, à l'intérieur de la membrane du compartiment tubulaire fermé 14, les constituants d'une mousse durcissable telle qu'une mousse de polyuréthane ou une mousse phénolique, pour remplir l'espace situé entre les éléments périphériques du ski. Pendant son expansion, la mousse 16 repousse et déforme la membrane tubulaire, qui elle-même soulève l'ébauche de renfort 15 et vient la plaquer contre la face interne de l'élément supérieur 6. La membrane tubulaire constitue l'interface entre l'élément supérieur 6 et la mousse 16. La membrane tubulaire assure le collage entre les éléments préimprégnés tels que les ébauches 12 et 15 et la mousse 16.

La réaction de durcissement de la mousse est généralement exothermique, et le dégagement de chaleur provoque un échauffement de l'ensemble des constituants insérés dans le moule, et notamment un échauffement des nappes textiles de renfort preimprégnées telles que l'ébauche 15. Dans le cas d'une nappe textile de renfort préimprégnée d'une resine thermoplastique, l'échauffement favorise le collage de l'ébauche 15 sur l'élément supérieur 6. Dans le cas d'une nappe textile préimprégnée d'une résine thermodurcissable humide ou partiellement réticulée, l'échauffement provoque un complément de réticulation de la résine, et le collage de l'ébauche 15 sur l'élément supérieur 6 et sur la membrane de compartiment tubulaire fermé 14.

Si nécessaire, un complément d'apport de chaleur est assuré de l'extérieur, pour échauffer l'ensemble pendant une durée et selon une température suffisantes pour assurer une réticulation et un collage complets de l'ensemble.

Après refroidissement, on peut démouler.

Dans le mode de réalisation de la figure 3, les éléments périphériques du ski ont la même structure que dans le mode de réalisation précédent, l'ébauche 15 a également la même structure. Dans ce cas, le compartiment tubulaire fermé 14 est formé de deux membranes en forme de feuilles 141 et 142, disposées l'une au-dessus de l'autre, de largeur supérieure à la largeur de l'espace 13 intérieur du moule 1, leurs bords latéraux étant pincés l'un contre l'autre pour assurer l'étanchéité latérale de la membrane. Ainsi, code dans le mode de réalisation précédent, les membranes réalisent un élément tubulaire fermé 14 dans lequel on peut injecter la mousse 16. Les bords latéraux des membranes 141 et 142 en forme de feuilles sont pincés entre les bords latéraux correspondants de l'élément supérieur 6 et de l'élément inférieur 5 du ski, et dépassent éventuellement dans le plan de joint 4 du moule 1.

Comme dans le mode de réalisation précédent, le renfort supérieur 15 et le renfort inférieur 12 peuvent être tous deux à l'état d'ébauches de renforts, constitués d'au moins une nappe textile préimprégnée.

Lors de l'injection et de l'expansion de la mousse 16, celle-ci déforme la membrane 141 et plaque l'ébauche 15 contre l'élément supérieur 6.

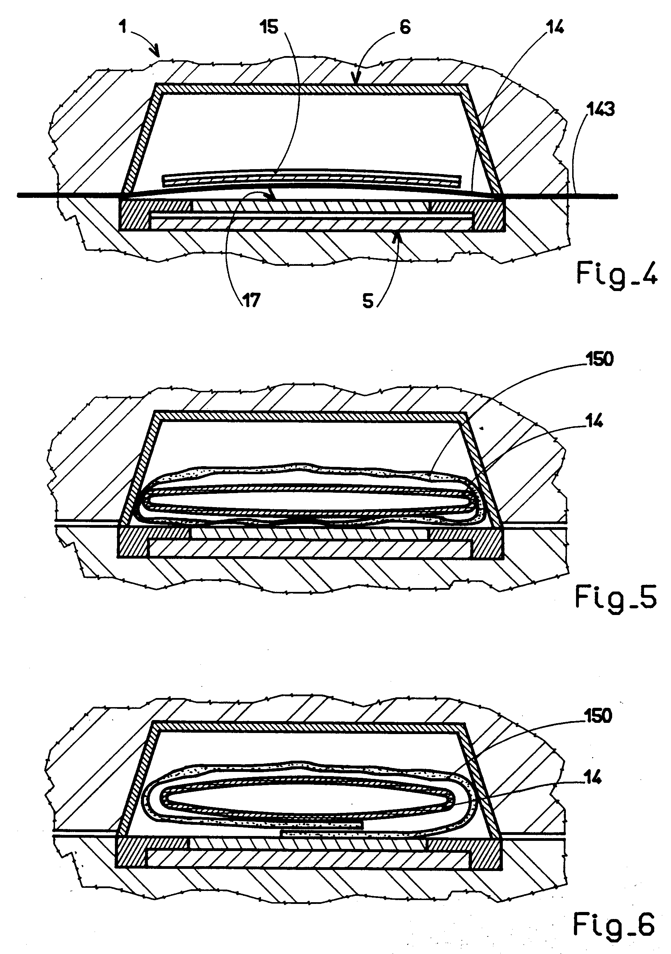

Dans le mode de réalisation de la figure 4, le compartiment tubulaire 14 est formé par la face supérieure 17 de l'élément inférieur 5 du ski et par une membrane 143 en forme de feuille dont les bords latéraux sont pincés entre les bords latéraux correspondants des l'élément supérieur 6 et de l'élément inférieur 5 du ski. Le renfort inférieur 12 doit, de préférence, être déjà sous sa forme et sa structure définitives, et non à l'état d'ébauche. La mousse est insérée à l'intérieur de l'élément tubulaire 14, et repousse la membrane 143 vers le haut pour plaquer l'ébauche 15 contre l'élément supérieur 6.

Dans le mode de réalisation de la figure 5, l'élément tubulaire 14 est également formé d'une membrane tubulaire, comme dans le mode de réalisation de la figure 1, mais il est inséré dans une ébauche d'élément de renfort mécanique 150 elle-même de forme tubulaire fermée. Sur la figure 6, l'ébauche d'élément de renfort mécanique 150 ne se referme pas sous l'élément tubulaire, mais est simplement pliée et se chevauche en partie inférieure. Dans les deux cas des figures 5 et 6, lors de l'injection de la mousse à l'intérieur de l'élément tubulaire 14, la mousse fait dilater l'élément tubulaire 14 qui plaque l'ébauche 150 régulièrement contre les faces internes des éléments périphériques du ski, constituant une structure en caisson.

Les membranes réalisant l'élément tubulaire 14 sont réalisées en un film de matière choisie pour ses propriétés d'adhérence avec d'une part la mousse constituant le noyau et d'autre part les parois contre lesquelles la membrane doit s'appliquer et se coller.

On peut avantageusement utiliser des membranes en polyuréthane, ou des membranes en copolyamide, en ABS (Acrylonitrile Butadiène Styrène). Les membranes peuvent avoir une épaisseur de quelques centièmes à quelques dixièmes de millimètre, avantageusement de un à dix dixièmes de millimètre.

Les ébauches de renfort 15, sous forme de couches comme sur les figures 1, 3 et 4, ou sous forme d'une enveloppe comme sur la figure 5, peuvent être en fibres de verre imprégnées, en zicral, en acier, en carbone, en métal amorphe. L'imprégnation peut se faire par une résine thermodurcissable humide ou partiellement réticulée choisie dans le groupe constitué par les polyesters, les époxydes, les polyuréthanes, les résines phénoliques.

En alternative, l'imprégnation peut se faire au moyen d'une resine thermoplastique choisie dans le groupe constitué par les polyamides, les polycarbonates, les PEI (Polyéther Imide).

La mousse 16 formée dans l'élément tubulaire 14 peut être une mousse en polyuréthane, ou une mousse phénolique.

Dans le cas d'ébauches de renfort en résine non entièrement polymérisée, la polymérisation de la résine peut s'effectuer par chauffage externe et/ou par l'exothermie de la réaction polyuréthane.

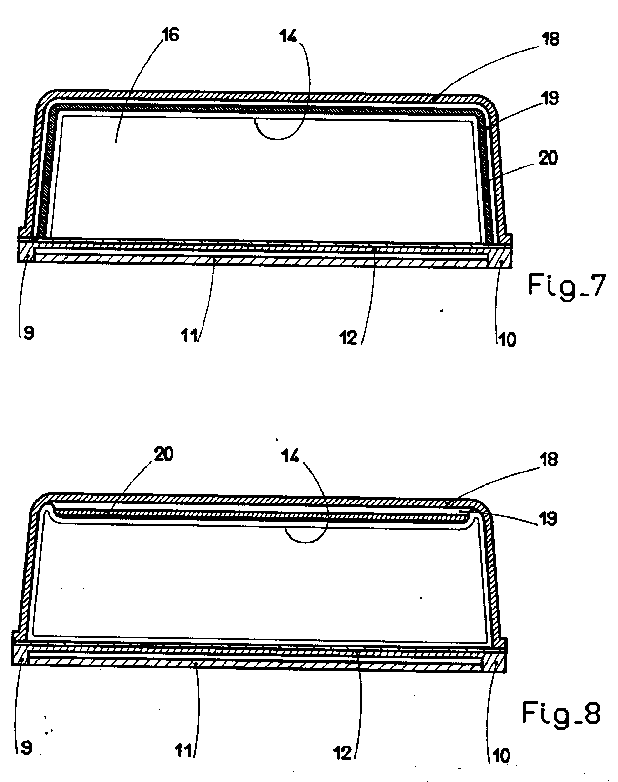

Les figures 7 et 8 illustrent deux structures de ski obtenues par le procédé de l'invention.

Sur la figure 7, le ski comprend un dessus 18 en matière thermoplastique pouvant être constituée de : un polyuréthane, un polyamide de type P11, P12, P6 ou autre, un plastique styrénique de type ABS-SAN ou autre, une polyoléfine de type polyéthylène ou polypropylène, un polycarbonate, une matière acrylique, ou un polyester modifié. La coque supérieure comprend en outre un renfort 19 et un renfort 20, en resine polymérisée armée de fibres, résultant de la polymérisation de l'ébauche 15. La membrane 14 forme l'interface entre la mousse 16 et le renfort 20. La membrane 14 forme également l'interface, en partie inférieure, avec le renfort inférieur 12 lui-même solidaire de la semelle 11 et des carres 9 et 10. Dans ce mode de réalisation, les deux renforts 19 et 20 présentent une coupe transversale en U inversé, et couvrent les faces internes de la paroi supérieure et des parois latérales du ski.

Dans le mode de réalisation de la figure 8, le ski comprend le même dessus 18, et les mêmes éléments inférieurs 9, 10, 11 et 12. Par contre, les éléments de renfort mécanique supérieurs 19 et 20 ne bordent que la face interne de la paroi supérieure du ski.

La présente invention n'est pas limitée aux modes de réalisation qui ont été explicitement décrits, mais elle en inclut les diverses variantes et généralisations contenues dans le domaine des revendications ci-après.

## Revendications

1. Procédé de réalisation d'un ski, comprenant une étape d'injection des constituants d'une mousse durcissable, d'expansion et de durcissement de ladite mousse durcissable, dans l'espace intérieur (13) défini par les éléments périphériques (5, 6) du ski, lesdits éléments périphériques comprenant notamment :
- un élément inférieur (5) en forme de plaque,
- un élément supérieur (6) en forme de paroi,
- au moins un élément de renfort mécanique (12, 15),
caractérisé en ce que :
- avant injection, on réalise, dans l'espace intérieur (13) un compartiment tubulaire fermé (14) déformable dont l'une au moins des parois est formée d'une membrane déformable et extensible en une matière présentant de bonnes propriétés d'adhérence sur la mousse durcissable et sur les éléments périphériques,
- on dispose, sur l'une au moins desdites parois du compartiment tubulaire (14), une ébauche de renfort mécanique (15),
- on injecte les constituants de mousse durcissable (16) à l'intérieur dudit compartiment tubulaire (14), de sorte que, pendant l'expansion, la mousse (16) emprisonnée dans le compartiment tubulaire (14) repousse et déforme la membrane du compartiment tubulaire (14) qui elle-même repousse chaque élément de renfort (12, 15) et vient le plaquer contre la face interne de l'un au moins desdits éléments (5, 6), la membrane constituant l'interface entre l'un au moins des éléments (5, 6) et la mousse (16),
- par échauffement, on assure le collage entre les éléments inférieur (5), supérieur (6), de renfort mécanique (12, 15) et ladite membrane maintenue par la mousse (16),
- après collage, on laisse refroidir et on démoule.

2. Procédé selon la revendication 1, caractérisé en ce qu'au moins un élément de renfort mécanique (12, 15) est une ébauche de renfort comprenant au moins une nappe textile de renfort préimprégnée d'une résine thermodurcissable ou d'une résine thermoplastique.

3. Procédé selon l'une des revendications 1 ou 2, caractérisé en ce qu'au moins un des éléments de renfort mécanique (12, 15) est une ébauche de renfort comprenant au moins une plaque métallique ou une plaque en résine armée de fibres, la résine étant entièrement polymérisée.

4. Procédé selon l'une des revendications 1 à 3, caractérisé en ce que l'élément supérieur (6) a une forme de paroi en U renversé.

5. Procédé selon la revendication 1, caractérisé en ce que le compartiment tubulaire (14) est formé par la face supérieure (17) de l'élément inférieur (5) et par une membrane (143) en forme de feuille dont les bords latéraux sont pincés entre les bords latéraux correspondants de l'élément supérieur (6) et de l'élément inférieur (5).

6. Procédé selon la revendication 1, caractérisé en ce que le compartiment tubulaire (14) comprend deux membranes (141, 142) en forme de feuilles disposées l'une sur l'autre et dont les bords latéraux sont pincés entre les bords latéraux correspondants de l'élément supérieur (6) et de l'élément inférieur (5), les deux membranes constituant une paroi supérieure et une paroi inférieure de compartiment tubulaire (14).

7. Procédé selon la revendication 1, caractérisé en ce que le compartiment tubulaire (14) est formé d'une membrane tubulaire, que l'on dispose dans l'espace intérieur (13).

8. Procédé selon l'une quelconque des revendications précédentes, caractérisé en ce que l'élément inférieur (5) comprend une ébauche de renfort mécanique inférieur (12), constituant la face supérieure de l'élément (5).

9. Procédé selon la revendication 7, caractérisé en ce que la membrane tubulaire (14) est insérée dans une ébauche d'élément de renfort mécanique (150) elle-même de forme tubulaire.

10. Procédé selon l'une quelconque des revendications 1 à 9, caractérisé en ce que ladite (lesdites) membrane (s) (14) comprend (comprennent) un film en polyuréthane.

11. Procédé selon l'une quelconque des revendications 1 à 9, caractérisé en ce que ladite (lesdites) membrane (s) (14) comprend (comprennent) un film en ABS.

12. Procédé selon l'une quelconque des revendications 1 à 9, caractérisé en ce que ladite (lesdites) membrane (s) (14) comprend (comprennent) un film en copolyamide.

13. Procédé selon l'une quelconque des revendications 1 à 9, caractérisé en ce que ladite (lesdites) membrane (s) (14) est (sont) réalisée (s) en un film multicouche.

14. Procédé selon l'une quelconque des revendications 1 à 13, caractérisé en ce que ladite (lesdites) membrane (s) (14) a (ont) une épaisseur comprise entre un et dix dixièmes de millimètre.

15. Procédé selon la revendication 2, caractérisé en ce que les nappes textiles de renfort sont imprégnées d'une résine thermodurcissable humide ou partiellement réticulée, choisie dans le groupe constitué par les polyesters, les époxydes, les polyuréthanes, les résines phénoliques.

16. Procédé selon la revendication 2, caractérisé en ce que les nappes textiles de renfort sont imprégnées d'une résine thermoplastique choisie dans le groupe constitué par les polyamides, les polycarbonates, les PEI (Polyéther Imide).

17. Procédé selon la revendication 15 ou 16, caractérisé en ce que la nappe textile de renfort est à base de fibres tissées ou non tissées en verre ou en carbone ou en kevlar.

18. Ski à structure composite, comportant au moins un élément inférieur (5) et un élément supérieur (6) en forme de paroi à profil en U inversé solidarisés l'un à l'autre par un noyau en mousse injectée (16), caractérisé en ce qu'un film de polymères (14) est disposé à l'interface entre ladite mousse injectée (16) et au moins l'élément supérieur (6), ledit élément supérieur (6) comportant un élément de renfort mécanique supérieur (20) formant la face inférieure dudit élément supérieur (6).

19. Ski selon la revendication 18, caractérisé en ce que l'élément de renfort mécanique supérieur (20) comprend au moins une nappe textile de renfort d'une résine thermodurcissable ou thermoplastique polymérisée ou une plaque métallique.

20. Ski selon la revendication 18 ou 19, caractérisé en ce que l'élément inférieur (5) comprend au moins un élément de renfort mécanique inférieur (12) comprenant une nappe de textile de renfort d'une résine thermodurcissable ou thermoplastique polymérisée ou une plaque métallique.

21. Ski selon l'une quelconque des revendications 18 à 20, caractérisé en ce que l'élément de renfort mécanique supérieure (20) présente une coupe transversale en forme de U renversé et couvre les faces internes de la paroi supérieure et des parois latérales.

22. Ski selon l'une quelconque des revendications 18 à 20, caractérisé en ce que l'élément de renfort mécanique supérieure (20) ne borde que la face interne de la paroi supérieure.

23. Ski selon l'une quelconque des revendications 18 à 22, caractérisé en ce que le fim (14) est un compartiment tubulaire fermé formant l'interface entre le noyau en mousse injectée (16) et les faces internes des parois, respectivement, supérieure, inférieure et latérales.

24. Ski selon la revendication 18, caractérisé en ce que le film de polymères (14) est en polyuréthane.

25. Ski selon la revendication 18, caractérisé en ce que le film de polymères (14) est en ABS.

26. Ski selon la revendication 18, caractérisé en ce que le film de polymères (14) est un copolyamide.

27. Ski selon la revendication 18, caractérisé en ce que le film de polymères (14) est multicouche.

28. Ski selon l'une quelconque des revendications 18 à 27, caractérisé en ce que l'élément de renfort mécanique supérieur (20) ou inférieur (12) est à base d'une résine choisie dans le groupe constitué par les polyesters, les époxydes, les polyuréthanes, les polyamides, les polycarbonates, les PEI (Polyéther Imide).

29. Ski selon l'une quelconque des revendications 18 à 28, caractérisé en ce que l'élément supérieur (6) comprend un dessus (18) en matière thermoplastique pouvant être constitué d'un polyuréthane, un polyamide de type P11, P12, P6 ou autre, un plastique styrénique de type ABS, SAN ou autre, une polyoléfine de type polyéthylène ou polypropylène, un polycarbonate, une matière acrylique ou un polyester modifié.

## Patentansprüche

1. Herstellungsverfahren eines Ski, das einen Schritt der Einspritzung der Bestandteile eines härtbaren Schaumes, der Ausdehnung und der Aushärtung dieses härtbaren Schaumes im Innenraum (13) aufweist, der durch die peripheren Elemente (5, 6) des Ski definiert ist, wobei die peripheren Elemente insbesondere aufweisen:
- ein unteres Element (5) in Form einer Platte,
- ein oberes Element (6) in Form einer Wand,
- zumindest ein mechanisches Verstärkungselement (12, 15),
**dadurch gekennzeichnet**, daß:
- man vor der Einspritzung im Innenraum (13) ein röhrenförmiges geschlossenes deformierbares Abteil (14) realisiert, bei dem eine der Wände aus einer deformierbaren und dehnbaren Membran aus einem Material gebildet ist, das gute Hafteigenschaften auf dem härtbaren Schaum und auf dem peripheren Element aufweist,
- man auf zumindest einer der Wände des röhrenförmigen Abteil (14) ein Rohteil einer mechanischen Verstärkung (15) anordnet,
- man die Bestandteile des härtbaren Schaumes (16) in das Innere des röhrenförmigen Abteils (14) einspritzt, so daß, während der Ausdehnung, der Schaum (16), der in dem röhrenförmigen Abteil (14) eingeschlossen ist, die Membran des röhrenförmigen Abteiles (14) zurückdrückt und deformiert, die wiederum jedes Verstärkungselement (12, 15) zurückdrückt und es gegen die innere Seite des zumindest einen Elementes (5, 6) drückt, wobei die Membran die Schnittstelle zwischen dem zumindest einen der Elemente (5, 6) und dem Schaum (16) bildet,
- man durch Erhitzen das Verkleben zwischen den unteren (5) und oberen (6) Elementen, der mechanischen Verstärkung (12, 15) und der Membran gewährleistet, die durch den Schaum (16) gehalten wird,
- man nach dem Kleben abkühlen läßt, und man entformt.

2. Verfahren gemäß Anspruch 1, dadurch gekennzeichnet, daß zumindest ein mechanisches Verstärkungselement (12, 15) ein Verstärkungsrohteil ist, das zumindest einen textilen Verstärkungsmantel aufweist, der mit einem wärmehärtbaren Harz oder einem thermoplastischen Harz vorimprägniert ist.

3. Verfahren gemäß einem der Ansprüche 1 und 2, dadurch gekennzeichnet, daß zumindest eines der mechanischen Verstärkungselemente (12, 15) ein Verstärkungsrohteil ist, das zumindest eine metallische Platte oder eine Platte aus faserverstärktem Harz aufweist, wobei das Harz vollständig polymerisiert ist.

4. Verfahren gemäß einem der Ansprüche 1 bis 3, dadurch gekennzeichnet, daß das obere Element (6) eine Wandform in Form eines gedrehten U hat.

5. Verfahren gemäß Anspruch 1, dadurch gekennzeichnet, daß das röhrenförmige Abteil (14) durch die obere Seite (17) des unteren Elementes (5) und durch eine Membran (143) in Form einer Folie gebildet ist, deren seitliche Ränder zwischen die seitlichen entsprechenden Ränder des oberen Elementes (6) und des unteren Elementes (5) geklemmt sind.

6. Verfahren gemäß Anspruch 1, dadurch gekennzeichnet, daß das röhrenförmige Abteil (14) zwei Membrane (141, 142) in Form von Folien aufweist, die aufeinander angeordnet sind, und deren seitliche Ränder zwischen die seitlichen entsprechenden Ränder des oberen Elementes (6) und des unteren Elementes (5) geklemmt sind, wobei die beiden Membrane eine obere Wand und eine untere Wand des röhrenförmigen Abteiles (14) bilden.

7. Verfahren gemäß Anspruch 1, dadurch gekennzeichnet, daß das röhrenförmige Abteil (14) aus einer röhrenförmigen Membran gebildet ist, die man im Innenraum (13) anordnet.

8. Verfahren gemäß einem der vorhergehenden Ansprüche, dadurch gekennzeichnet, daß das untere Element (5) ein Rohteil einer unteren mechanischen Verstärkung (12) aufweist, das die obere Seite des Elementes (5) bildet.

9. Verfahren gemäß Anspruch 7, dadurch gekennzeichnet, daß die röhrenförmige Membran (14) in ein Rohteil eines mechanischen Verstärkungselementes (150) eingefügt ist, das selbst von röhrenförmiger Form ist.

10. Verfahren gemäß einem der Ansprüche 1 bis 9, dadurch gekennzeichnet, daß die Membran(en) (14) eine Schicht aus Polyurethan aufweist (aufweisen).

11. Verfahren gemäß einem der Ansprüche 1 bis 9, dadurch gekennzeichnet, daß die Membran(en) (14) eine Schicht aus ABS aufweist (aufweisen).

12. Verfahren gemäß einem der Ansprüche 1 bis 9, dadurch gekennzeichnet, daß die Membran(en) (14) eine Schicht aus Copolyamid aufweist (aufweisen).

13. Verfahren gemäß einem der Ansprüche 1 bis 9, dadurch gekennzeichnet, daß die Membran(en) (14) aus einer vielschichtigen Schicht realisiert ist (sind).

14. Verfahren gemäß einem der Ansprüche 1 bis 13, dadurch gekenn- zeichnet, daß die Membran(en) (14) eine Dicke hat (haben), die zwischen einem und zehn Zehntel Millimeter enthalten ist.

15. Verfahren gemäß Anspruch 2, dadurch gekennzeichnet, daß die textilen Verstärkungsmäntel mit einem wärmehärtbaren feuchten oder teilweise vernetzten Harz imprägniert sind, das aus der Gruppe gewählt ist, die durch die Polyester, die Epoxide, die Polyurethane, die Phenolharze gebildet ist.

16. Verfahren gemäß Anspruch 2, dadurch gekennzeichnet, daß die textilen Verstärkungsmäntel mit einem thermoplastischen Harz imprägniert sind, das aus der Gruppe gewählt ist, die durch die Polyamide, die Polycarbonate, die PEI (Polyetherimide) gebildet ist.

17. Verfahren gemäß Anspruch 15 oder 16, dadurch gekennzeichnet, daß der textile Verstärkungsmantel auf der Basis von gewebten oder nicht gewebten Fasern aus Glas oder aus Kohlenstoff oder aus Kevlar ist.

18. Ski mit einem zusammengesetzten Aufbau, der zumindest ein unteres Element (5) und ein oberes Element (6) in Form einer Wand mit einem umgedrehten U-Profil aufweist, die miteinander durch einen Kern aus einem eingespritzten Schaum (16) fest verbunden sind, dadurch gekennzeichnet, daß eine Schicht aus Polymeren (14) an der Schnittstelle zwischen dem eingespritzten Schaum (16) und zumindest dem oberen Element (6) angeordnet ist, wobei das obere Element (6) ein oberes mechanisches Verstärkungselement (20) aufweist, das die untere Seite des oberen Elementes (6) bildet.

19. Ski gemäß Anspruch 18, dadurch gekennzeichnet, daß das obere mechanisches Verstärkungselement (20) zumindest einen textilen Verstärkungsmantel aus einem wärmehärtbaren oder thermoplastischen polymerisierten Harz oder eine metallische Platte aufweist.

20. Ski gemäß Anspruch 18 oder 19, dadurch gekennzeichnet, daß das untere Element (5) zumindest ein unteres mechanisches Verstärkungselement (12) aufweist, das einen textilen Verstärkungsmantel aus einem wärmehärtbaren oder thermoplastischen polymerisierten Harz oder eine metallische Platte aufweist.

21. Ski gemäß einem der Ansprüche 18 bis 20, dadurch gekennzeichnet, daß das obere mechanische Verstärkungselement (20) einen transversalen Schnitt in Form eines gedrehten U aufweist, und die inneren Seiten der oberen Wand und der seitlichen Wände bedeckt.

22. Ski gemäß einem der Ansprüche 18 bis 20, dadurch gekennzeichnet, daß das obere mechanische Verstärkungselement (20) nur die innere Seite der oberen Wand begrenzt.

23. Ski gemäß einem der Ansprüche 18 bis 22, dadurch gekennzeichnet, daß die Schicht (14) ein röhrenförmiges geschlossenes Abteil ist, das die Schnittstelle zwischen dem Kern aus einem eingespritzten Schaum (16) und den inneren Seiten der Wände, jeweils der oberen, der unteren und den seitlichen bildet.

24. Ski gemäß Anspruch 18, dadurch gekennzeichnet, daß die Polymerschicht (14) aus Polyurethan ist.

25. Ski gemäß Anspruch 18, dadurch gekennzeichnet, daß die Polymerschicht (14) aus ABS ist.

26. Ski gemäß Anspruch 18, dadurch gekennzeichnet, daß die Polymerschicht (14) ein Copolyamid ist.

27. Ski gemäß Anspruch 18, dadurch gekennzeichnet, daß die Polymerschicht (14) vielschichtig ist.

28. Ski gemäß einem der Ansprüche 18 bis 27, dadurch gekennzeichnet, daß das obere (20) oder untere (12) mechanische Verstärkungselement auf einem Harz basiert, das aus der Gruppe gewählt ist, die durch Polyester, die Epoxide, die Polyurethane, die Polyamide, die Polycarbonate, die PEI (Polyetherimide) gebildet ist.

29. Ski gemäß einem der Ansprüche 18 bis 28, dadurch gekennzeichnet, daß das obere Element (6) ein Oberteil (18) aus einem thermoplastischen Material aufweist, das aus einem Polyurethan, einem Polyamid vom Typ P11, P12, P6 oder anderem, einem Styrolkunststoff vom Typ ABS, SAN oder anderem, einem Polyolefin vom Typ Polyethylen oder Polypropylen, einem Polycarbonat, einem Acrylmaterial oder einem modifizierten Polyester gebildet ist.

## Claims

1. Manufacturing method of a ski, comprising a step of injecting the components of a hardenable foam, of expansion and hardening of said hardenable foam, in the inner space (13) defined by the peripheral elements (5, 6) of the ski, said peripheral elements mainly comprising:
- a lower element (5) shaped like a plate,
- an upper element (6) shaped like a wall,
- at least one mechanical reinforcement element (12, 15),
characterized in that:
- before injection, a closed deformable tubular compartment (14) is obtained in inner space (13), at least one of the walls of said compartment being formed of a deformable and stretchable membrane made of a material having good adhesive properties on the hardenable foam and on the peripheral elements,
- a mechanical reinforcement blank (15) is arranged on at least one of said walls of tubular compartment (14),
- the components of hardenable foam (16) are injected inside said tubular compartment (14), such that, during expansion, the foam (16) imprisoned in tubular compartment (14) pushes and deforms the membrane of tubular compartment (14) which itself pushes back each reinforcement element (12, 15) and applies it against the inner surface of at least one of said elements (5, 6), the membrane constituting the interface between at least one of the elements (5, 6) and the foam (16),
- by heating, the adhesion between the lower (5) and upper (6) elements, the mechanical reinforcements (12, 15) and said membrane maintained by foam (16) is ensured,
- after adhesion, it is left to cool, and is then demolded.

2. Method as per claim 1, characterized in that at least one mechanical reinforcement element (12, 15) is a reinforcement blank comprising at least one textile reinforcement web preimpregnated with a thermohardenable resin or a thermoplastic resin.

3. Method as defined by claims 1 or 2, characterized in that at least one of the mechanical reinforcement elements (12, 15) is a reinforcement blank comprising at least one metallic plate or a plate made of fiber reinforced resin, the resin being completely polymerized.

4. Method as defined by any of claims 1 to 3, characterized in that the upper element (6) is shaped like an inverted U-shaped wall.

5. Method as defined by claim 1, characterized in that the tubular compartment (14) is formed by the upper surface (17) of the lower element (5) and by a membrane (143) in the form of a film whose lateral edges are pinched between the corresponding lateral edges of upper element (6) and lower element (5).

6. Method as defined by claim 1, characterized in that the tubular compartment (14) comprises two membranes (141, 142) in the form of films located one on top of another and whose lateral edges are pinched between the corresponding lateral edges of the upper element (6) and the lower element (5), the two membranes constituting an upper wall and a lower wall of tubular compartment (14).

7. Method as defined by claim 1, characterized in that the tubular compartment (14) is formed of a tubular membrane, which is located in inner space (13).

8. Method as defined by any of the preceding claims, characterized in that the lower element (5) comprises a lower mechanical reinforcement blank (12), constituting the upper surface of element (5).

9. Method as defined by claim 7, characterized in that the tubular membrane (14) is inserted in a mechanical reinforcement element blank (150), itself having a tubular shape.

10. Method as defined by any of claims 1-9, characterized in that said membrane(s) (14) comprises (comprise) a polyurethane film.

11. Method as defined by any of claims 1-9, characterized in that said membrane(s) (14) comprises (comprise) a film made of ABS.

12. Method as defined by any of claims 1-9, characterized in that said membrane(s) (14) comprises (comprise) a film made of copolyamide.

13. Method as defined by any of claims 1-9, characterized in that said membrane(s) (14) is (are) made of a multilayered film.

14. Method as defined by any of claims 1-13, characterized in that said membrane(s) (14) has (have) a thickness comprised between 1 and 10/10ths of a millimeter.

15. Method as defined by claim 2, characterized in that the reinforcement textile webs are impregnated with a moist or partially crosslinked thermohardenable resin, selected from the group constituted by polyesters, epoxies, polyurethanes, phenolic resins.

16. Method as defined by claim 2, characterized in that the textile reinforcement webs are impregnated with a thermoplastic resin, selected from the group constituted by polyamides, polycarbonates, and PEIs (Polyether Imides).

17. Method as defined by claims 15 or 16, characterized in that the textile reinforcement web is made of a woven or non-woven glass, carbon, or kevlar fibers.

18. Ski having a composite structure, comprising at least one lower element (5) and one upper element (6) shaped like a wall having an inverted U-shaped section affixed to one another by a core made of injected foam (16), characterized in that a polymer film (14) is located at the interface between said injected foam (16) and at least the upper element (6), said upper element (6) comprising an upper mechanical reinforcement element (20) forming the lower surface of said upper element (6).

19. Ski as defined by claim 18, characterized in that the upper mechanical reinforcement element (20) comprises at least one textile reinforcement web made of a polymerized thermohardenable or thermoplastic resin or a metallic plate.

20. Ski as defined by claims 18 or 19, characterized in that the lower element (5) comprises at least one lower mechanical reinforcement element (12) comprising a textile reinforcement web made of a polymerized thermohardenable or thermoplastic resin or a metallic plate.

21. Ski as defined by any of claims 18-20, characterized in that the upper mechanical reinforcement element (20) has a transverse section shaped like an inverted U and covers the inner surfaces of the upper wall and the lateral walls.

22. Ski as defined by any of claims 18-20, characterized in that the upper mechanical reinforcement element (20) only borders the inner surface of the upper wall.

23. Ski as defined by any of claims 18-22, characterized in that the film (14) is a closed tubular compartment forming the interface between the core made of injected foam (16) and the inner surfaces of the walls, respectively, upper, lower and lateral.

24. Ski as defined by claim 18, characterized in that the polymer film (14) is made of polyurethane.

25. Ski as defined by claim 18, characterized in that the polymer film (14) is made of ABS.

26. Ski as defined by claim 18, characterized in that the polymer film (14) is made of a copolyamide.

27. Ski as defined by claim 18, characterized in that the polymer film (14) is multilayered.

28. Ski as defined by any of claims 18-27, characterized in that the upper (20) or the lower (12) mechanical reinforcement element is made of a resin chosen from the group constituted by polyesters, epoxies, polyurethanes, polyamides, polycarbonates and PEIs (Polyether Imides).

29. Ski as defined by any of claims 18-28, characterized in that the upper element (6) comprises a top (18) made of a thermoplastic material capable of being constituted by a polyurethane, a polyamide of the P11, P12, P6 type or other, a styrenic plastic of the ABS, SAN type or other, a polyolefin of the polyethylene or polypropylene type, a polycarbonate, an acrylic material or a modified polyester.
